# FASCICULE DE BREVET EUROPEEN

(11) **EP 4 638 170 B1**
(45) Date de publication et mention de la délivrance du brevet: **02.12.2026**
(21) Numéro de dépôt: 23836724.7
(22) Date de dépôt: 15.12.2023
(51) Int. Cl.: B60K 1/04, B60L 53/80

(54) **DISPOSITIF EMBARQUÉ DE STOCKAGE D'ÉNERGIE ÉLECTRIQUE POUR VÉHICULE AUTOMOBILE**
EINGEBETTETER ELEKTRISCHER ENERGIESPEICHER FÜR KRAFTFAHRZEUGE
AN ONBOARD ELECTRIC ENERGY STORAGE DEVICE FOR MOTOR VEHICLES

(30) Priorité: 23.12.2022 FR 2214481
(43) Date de publication de la demande: 29.10.2025
(73) Titulaire: RENAULT s.a.s., 92100 Boulogne-Billancourt (FR)
(72) Inventeur: LERAY, David, 78280 Guyanncourt (FR); TOURRET, Thierry, 78280 Guyanncourt (FR)
(74) Mandataire: Renault Group
(86) Numéro de dépôt international: PCT/EP2023/086119
(87) Numéro de publication internationale: WO 2024/132953

(56) Documents cités:
- WO-A1-2012/032242
- CN-A- 108 705 947
- CN-A- 114 248 612
- DE-A1- 102009 052 525
- FR-A1- 2 685 547

## Description

### Domaine technique

La présente invention concerne un dispositif embarqué de stockage d'énergie électrique alimentant une machine électrique de traction d'un véhicule automobile.

La présente invention trouve une application particulièrement intéressante dans le cas de transformation ou « retrofit » en langue anglaise des véhicules automobiles à motorisation thermique en motorisation électrique ou en motorisation partiellement électrique.

On entend par motorisation partiellement électrique, une motorisation hybride associant un moteur thermique et une machine électrique de traction.

### Techniques antérieures

Les technologies actuelles des dispositifs de stockage d'énergie électrique ne permettent pas des recharges aussi rapides que les solutions classiques de réservoirs de carburant utilisés dans les motorisations thermiques. En effet, le remplissage d'un réservoir de véhicule à motorisation thermique nécessite typiquement seulement quelques minutes, alors qu'une recharge rapide utilisant les meilleures technologies électriques permet d'atteindre une recharge d'environ 80% de la capacité des batteries en environ une demi-heure.

Une solution permettant de gagner en rapidité est d'échanger le dispositif de stockage d'énergie électrique du véhicule lorsqu'il est déchargé par un autre dispositif de stockage préalablement chargé.

Par exemple, le document DE 10 2009/052525-A1 décrit une batterie amovible pour l'alimentation en énergie électrique d'un véhicule visant à faciliter le remplacement de la batterie.

Cependant, la batterie décrite dans ce document n'est pas modulable, sa capacité électrique ne pouvant être augmentée a posteriori.

Par exemple, le document WO 2012/032242-A1 décrit un système et un procédé de remplacement d'une batterie déchargée par une batterie chargée préalablement. Les documents FR2685547 et CN108705947 décrivent d'autres configurations de remplacement de batterie de traction latéralement ou par le dessous du véhicule.

Cependant, le procédé de remplacement de la batterie décrit dans ces documents exclut le remplacement manuel des batteries, car il nécessite l'emploi de structures de levage ou d'extraction dédiées lourdes.

On connaît également, par le document CN114248612, un mécanisme de verrouillage d'un pack batterie amovible sur un véhicule électrique. Ce mécanisme comprend un corps de verrouillage, un noyau de verrou doté d'un élément élastique de rappel, et un capteur de détection permettant de vérifier la position verrouillée du noyau.

### Exposé de l'invention

Au vu de ce qui précède, l'invention propose un dispositif de stockage d'énergie électrique permettant d'offrir des caractéristiques électriques modulables et facilitant le remplacement manuel des batteries dudit dispositif.

Dans la suite du document, on comprend par batterie l'élément de stockage d'énergie électrique considéré sous sa forme finale. Ainsi une batterie peut comprendre plusieurs modules constitués eux-mêmes d'associations en série et/ou en parallèle de cellules électriques élémentaires.

L'invention a pour objet un dispositif embarqué de stockage d'énergie électrique pour véhicule automobile, comprenant une embase reliée électriquement à une machine électrique de traction du véhicule, un premier mécanisme de verrouillage fixé à l'embase et une première batterie comprenant une première cavité cylindrique formée au centre d'une face inférieure de la batterie, une deuxième cavité cylindrique formée au centre d'une face supérieure de la batterie, ladite première batterie étant fixée de manière amovible à l'embase par le premier mécanisme de verrouillage destiné à être logé dans la première cavité et apte à constituer une connexion électrique entre ladite première batterie et l'embase.

Le dispositif comprend des batteries supplémentaires empilées sur la première batterie, chaque batterie supplémentaire comprenant une première cavité cylindrique formée au centre d'une face inférieure de ladite batterie supplémentaire et une deuxième cavité cylindrique formée au centre d'une face supérieure de ladite batterie supplémentaire, et étant connectée de manière amovible à la batterie immédiatement inférieure par un deuxième mécanisme de verrouillage apte à constituer des connexions électriques entre ladite batterie supplémentaire et la batterie immédiatement inférieure. Lesdits premier et deuxièmes mécanismes de verrouillage comprennent une position verrouillée et une position déverrouillée obtenues par une rotation relative respectivement entre la première batterie et l'embase, et entre les batteries.

Un tel dispositif permet de moduler les caractéristiques électriques et de faciliter le changement des batteries.

Selon une caractéristique, chaque mécanisme de verrouillage comprend une partie cylindrique circulaire extérieure, une partie cylindrique circulaire intérieure et une partie intermédiaire comprenant au moins un roulement disposé entre lesdites parties cylindriques et favorisant leur rotation relative.

Avantageusement, chaque mécanisme de verrouillage comprend un bossage supérieur disposé sur une face horizontale supérieure de la partie cylindrique circulaire intérieure et des loquets horizontaux destinés à suivre un mouvement de rotation autour d'un axe vertical vers l'extérieur ou vers l'intérieur dudit mécanisme lorsque ledit mécanisme est actionné respectivement vers une position verrouillée ou vers une position déverrouillée. Le deuxième mécanisme de verrouillage comprend en outre un bossage inférieur disposé sur une face horizontale inférieure de la partie cylindrique circulaire extérieure. Lesdites cavités cylindriques comprennent chacune un fond muni d'une rainure et un alésage muni d'une gorge, ladite rainure des premières cavités et ladite rainure des deuxièmes cavités étant destinées à loger respectivement un bossage supérieur et un bossage inférieur desdits mécanismes de verrouillage, ladite gorge étant destinée à recevoir au moins une partie des loquets des mécanismes de verrouillage lorsque les mécanismes de verrouillage sont en position verrouillée.

Selon une caractéristique, chaque loquet est articulé en rotation autour d'une tige correspondante verticale fixée sur la partie cylindrique circulaire extérieure du mécanisme de verrouillage comprenant ledit loquet.

Selon une autre caractéristique, le mouvement de rotation des loquets est réalisé par l'intermédiaire de biellettes associées aux loquets, à raison d'une biellette par loquet, chaque biellette ayant une première extrémité articulée au loquet correspondant et une deuxième extrémité articulée à la partie cylindrique circulaire intérieure du mécanisme de verrouillage comprenant ledit loquet.

Avantageusement, la partie cylindrique circulaire intérieure dudit mécanisme de verrouillage comprend un doigt d'indexage et un ressort associé, ledit doigt d'indexage étant poussé par ledit ressort contre la partie cylindrique circulaire extérieure dudit mécanisme de verrouillage et se logeant dans une cavité associée lorsque ledit mécanisme de verrouillage se trouve en position verrouillée.

Ladite cavité associée a une forme complémentaire audit doigt et est disposée sur la partie cylindrique circulaire extérieure dudit mécanisme de verrouillage.

Selon une caractéristique, le passage entre la position verrouillée et la position déverrouillée des mécanismes de verrouillage est réalisée par une rotation d'un angle compris entre 20° et 90°.

De préférence, les batteries ont une forme de cylindre circulaire droit.

Avantageusement, le côté latéral des batteries est muni d'une jante équipée d'un cerclage en caoutchouc.

L'invention a aussi pour objet un véhicule automobile équipé d'au moins une machine électrique de traction et d'un dispositif embarqué de stockage d'énergie électrique tel que décrit ci-dessus.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] illustre un véhicule automobile équipé du dispositif de stockage d'énergie électrique selon l'invention ;
[Fig 2] est une vue de face en éclaté du dispositif de stockage, selon un mode de réalisation de l'invention;
[Fig 3] illustre le dispositif de la [Fig 2] en position montée;
[Fig 4] est une demi-coupe en perspective d'une batterie selon l'invention ;
[Fig 5] est une vue de face partielle et en perspective d'un premier mécanisme de verrouillage selon l'invention ;
[Fig 6] est une vue de face partielle et en perspective d'un deuxième mécanisme de verrouillage selon l'invention ;
[Fig 7] est une vue en coupe d'un mécanisme de verrouillage selon l'invention ;
[Fig 8] illustre le mécanisme de verrouillage de la [Fig 7] en position verrouillée ; et
[Fig 9] est une vue en perspective et en éclaté d'une batterie selon un mode de réalisation de l'invention.

### Exposé détaillé d'au moins un mode de réalisation

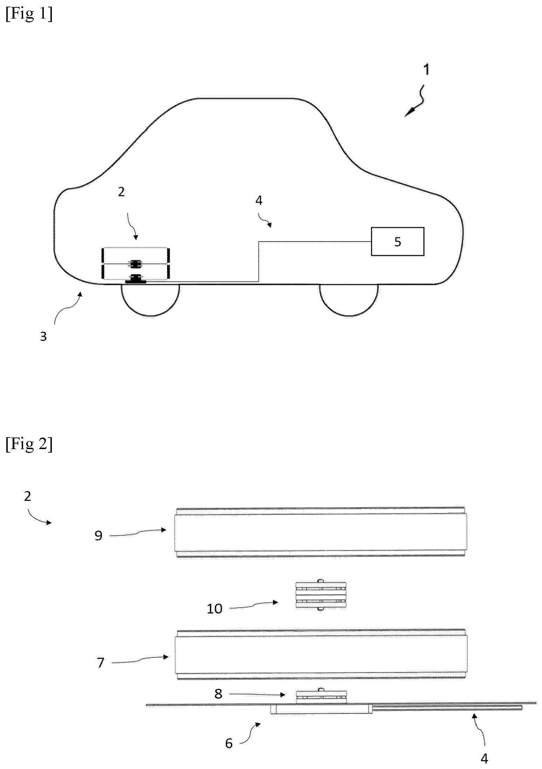

La figure 1 représente un véhicule automobile 1 équipé du dispositif de stockage d'énergie électrique 2 fixé au châssis 3 du véhicule 1 dans un logement prévu au niveau du coffre arrière par exemple et relié par une connexion électrique 4 à une machine 5 électrique de traction du véhicule 1.

Dans les figures suivantes, les mêmes références seront utilisées pour des éléments identiques ou similaires dans chaque mode de réalisation de l'invention, pour une raison de simplification de la description.

La figure 2 est une vue de face en éclaté du dispositif de stockage 2, selon un mode de réalisation de l'invention.

Le dispositif 2 comprend une embase 6 fixée au châssis 3 du véhicule 1 et reliée électriquement à la machine électrique 5 du véhicule 1.

Le dispositif 2 comprend également une première batterie 7 fixée de manière amovible à l'embase 6 par un premier mécanisme de verrouillage 8 de l'embase.

Le dispositif 2 est apte à accueillir des batteries supplémentaires 9 par empilement, chaque batterie supplémentaire étant connectée de manière amovible à la batterie immédiatement inférieure par un deuxième mécanisme de verrouillage 10 apte à constituer des connexions électriques entre ladite batterie supplémentaire et la batterie immédiatement inférieure.

Dans le mode de réalisation illustré sur la figure 2, le dispositif 2 comprend une batterie supplémentaire 9 connectée de manière amovible à la première batterie 7 par un deuxième mécanisme de verrouillage 10 constituant des connexions électriques entre la batterie supplémentaire 9 et la première batterie 7.

D'autres modes de réalisation sont possibles, notamment en multipliant les batteries supplémentaires.

Dans le mode de réalisation présenté les batteries supplémentaires 9 sont identiques à la première batterie 7. En alternative, il reste possible que les batteries supplémentaires 9 aient des caractéristiques différentes de celles de la première batterie 7.

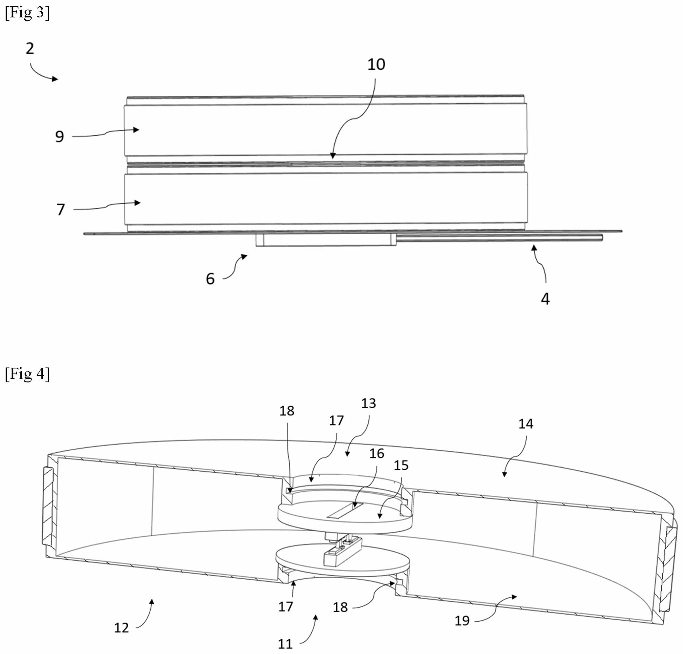

La figure 3 illustre le dispositif de la figure 2 en position montée.

La figure 4 est une demi-coupe en perspective d'une batterie 7, 9 selon l'invention. Chaque batterie 7, 9 comprend une première cavité 11 cylindrique formée au centre d'une face inférieure 12 de la batterie et une deuxième cavité 13 cylindrique formée au centre d'une face supérieure 14 de la batterie. Les cavités cylindriques 11, 13 comprennent chacune un fond 15 muni d'une rainure 16, et un alésage 17 muni d'une gorge 18.

Les batteries 7, 9 disposent d'une cavité 19 destinée à accueillir des modules regroupant chacun plusieurs cellules électriques élémentaires.

De préférence, les batteries 7, 9 ont une forme de cylindre circulaire droit.

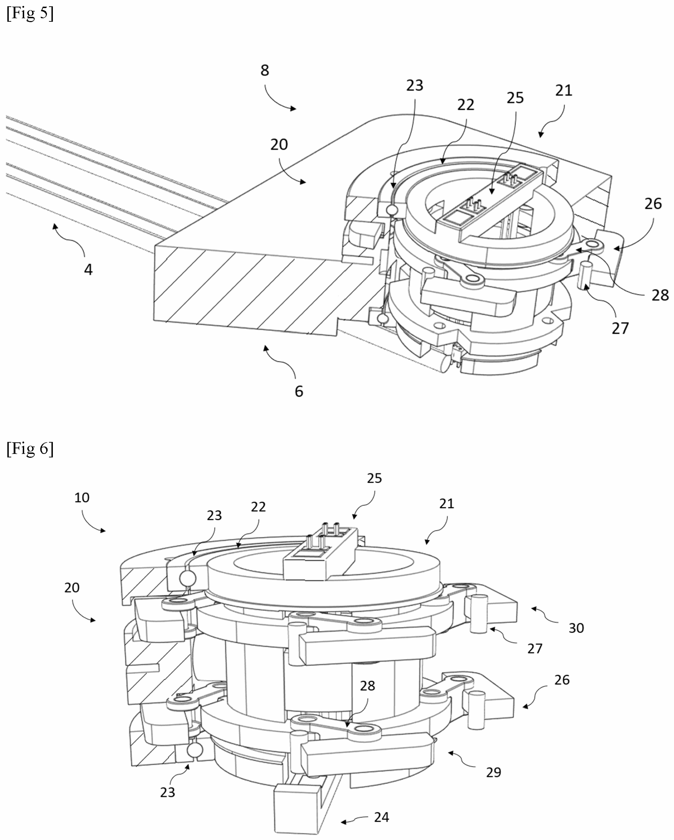

La figure 5 est une vue de face partielle et en perspective du premier 8 mécanismes de verrouillage. Le premier mécanisme 8 comprend une partie cylindrique circulaire extérieure 20, une partie cylindrique circulaire intérieure 21 et une partie intermédiaire 22 comprenant au moins un roulement 23 disposé entre lesdites parties cylindriques et favorisant leur rotation relative.

La partie cylindrique circulaire extérieure 20 du premier mécanisme 10 est fixée à l'embase 6.

Le premier mécanisme de verrouillage 8 permet de connecter de manière amovible une première batterie 7 à l'embase 6.

Le premier mécanisme de verrouillage 8 est actionné entre une position verrouillée et une position déverrouillée par une rotation relative entre la première batterie 7 et l'embase 6.

Le premier mécanisme 8 comprend un bossage supérieur 25 disposé sur une face horizontale supérieure de la partie cylindrique circulaire intérieure 21 et des loquets 26 horizontaux destinés à suivre un mouvement de rotation autour d'un axe vertical vers l'extérieur ou vers l'intérieur dudit mécanisme lorsque ledit mécanisme est actionné respectivement vers une position verrouillée ou vers une position déverrouillée.

Les loquets 26 du mécanisme 8 sont disposés dans un unique plan horizontal. De préférence, le mécanisme 8 comprend au moins trois loquets 26.

Pour assurer le mouvement de rotation des loquets 26 autour d'un axe vertical, chaque loquet 26 du mécanisme 8 est articulé en rotation autour d'une tige 27 correspondante verticale fixée sur la partie cylindrique circulaire extérieure 20 du mécanisme de verrouillage comprenant ledit loquet.

Afin de transmettre les forces latérales nécessaires à la mise en rotation des loquets 26, des biellettes 28 sont associées aux loquets 26, à raison d'une biellette 28 par loquet 26, chaque biellette 28 ayant une première extrémité articulée au loquet 26 correspondant et une deuxième extrémité articulée à la partie cylindrique circulaire intérieure 21 du mécanisme de verrouillage 8 comprenant ledit loquet 26.

Le mouvement de rotation des loquets 26 vers l'extérieur du mécanisme 8 est autorisé par les gorges 18 prévues sur les alésages 17 des cavités 11. Ainsi, lorsque le mécanisme 8 est actionné vers une position verrouillée les loquets 26 pénètrent à l'intérieur des gorges 18. Lorsque le mécanisme 8 est dans une position verrouillée les loquets 26 empêchent toute translation axiale relative entre le mécanisme 8 et la première batteries 7, en butant contre la gorge 18 recevant lesdits loquets 26.

Selon l'invention, la cinématique de montage de la première batterie 7 est comme suit. La cinématique de montage d'une batterie supplémentaire 9 sera décrite plus loin.

Préalablement au montage de la première batterie 7, un premier mécanisme 8 est actionné en position déverrouillée afin d'autoriser la pénétration dans la première cavité 11 formée au centre de la face inférieure 12 de la première batterie 7 que l'on souhaite installer.

On fait descendre ensuite la première batterie 7 au-dessus de l'embase 6, en faisant pénétrer le premier mécanisme de verrouillage 8 à l'intérieur de la première cavité 11 formée au centre de la face inférieure 12 de la première batterie 7 que l'on souhaite installer.

La rainure 16 de la première cavité 11 loge le bossage supérieur 25 du premier mécanisme de verrouillage 8 empêchant ainsi tout glissement relatif et toute rotation relative entre le bossage supérieur 25 et la première batterie 7 que l'on souhaite installer.

La mise en rotation relative de la première batterie 7 par rapport à l'embase 6, entraîne la rotation relative entre la partie cylindrique circulaire intérieure 21 et la partie cylindrique circulaire extérieure 20 dudit mécanisme 8. Cette mise en rotation s'effectue manuellement en faisant tourner la première batterie 7 à la manière d'un volant.

Le mouvement de rotation entre lesdites parties cylindriques 20, 21 engendre par l'intermédiaire des biellettes 28 un mouvement de rotation des loquets 26 autour des tiges 27 verticales associées, vers l'extérieur ou vers l'intérieur du mécanisme 8 lorsque ledit mécanisme est actionné respectivement vers une position verrouillée ou vers une position déverrouillée. De préférence, le passage entre la position verrouillée et la position déverrouillée du premier mécanisme de verrouillage est réalisée par une rotation relative d'un angle compris entre 20° et 90°.

Pour démonter la première batterie 7 on comprend qu'il suffit de réaliser les étapes décrites dans l'ordre inverse.

La figure 6 est une vue de face partielle et en perspective du deuxième mécanisme de verrouillage 10.

Le deuxième mécanisme de verrouillage 10 comprend une partie cylindrique circulaire extérieure 20, une partie cylindrique circulaire intérieure 21 et une partie intermédiaire 22 comprenant au moins un roulement 23 disposé entre lesdites parties cylindriques 20, 21 et favorisant leur rotation relative.

Le deuxième mécanisme de verrouillage 10 permet de connecter de manière amovible une batterie supplémentaire 9 à une batterie 7, 9 immédiatement inférieure du dispositif 2.

Le deuxième mécanisme de verrouillage 10 est actionné entre une position verrouillée et une position déverrouillée par une rotation relative entre les batteries adjacentes qu'il connecte.

Le deuxième mécanisme de verrouillage 10 comprend un bossage inférieur 24 disposé sur une face horizontale inférieure de la partie cylindrique circulaire extérieure 20 et un bossage supérieur 25 disposé sur une face horizontale supérieure de la partie cylindrique circulaire intérieure 21.

Le deuxième mécanisme de verrouillage 10 comprend en outre des loquets 26 horizontaux destinés à suivre un mouvement de rotation autour d'un axe vertical vers l'extérieur ou vers l'intérieur du mécanisme 10 lorsque ledit mécanisme 10 est actionné respectivement vers une position verrouillée ou vers une position déverrouillée.

Pour assurer le mouvement de rotation des loquets 26 autour d'un axe vertical, chaque loquet 26 du mécanisme 10 est articulé en rotation autour d'une tige 27 correspondante verticale fixée sur la partie cylindrique circulaire extérieure du mécanisme de verrouillage comprenant ledit loquet.

Afin de transmettre les forces latérales nécessaires à la mise en rotation des loquets 26, des biellettes 28 sont associées aux loquets 26, à raison d'une biellette 28 par loquet 26, chaque biellette 28 ayant une première extrémité articulée au loquet 26 correspondant et une deuxième extrémité articulée à la partie cylindrique circulaire intérieure 21 du mécanisme de verrouillage 10 comprenant ledit loquet 26.

Le mouvement de rotation des loquets 26 vers l'extérieur du mécanisme 10 est autorisé par les gorges 18 prévues sur les alésages 17 des cavités 11, 13. Ainsi, lorsque le mécanisme 10 est actionné vers une position verrouillée les loquets 26 pénètrent à l'intérieur des gorges 18. Lorsque le mécanisme 10 est dans une position verrouillée les loquets 26 empêchent toute translation axiale relative entre le mécanisme 10 et les batteries 7, 9 qu'il connecte, en butant contre la gorge 18 recevant lesdits loquets 26.

Une partie des loquets 26 du mécanisme 10 sont disposés dans un premier plan horizontal 29, l'autre partie des loquets étant disposés dans un deuxième plan horizontal 30, supérieur au premier. De préférence, au moins trois loquets 26 sont disposés dans chaque plan 29, 30. De préférence, on dispose du même nombre de loquets 26 dans chaque plan 29, 30.

Le deuxième mécanisme de verrouillage 10 est apte à constituer des connexions électriques entre ladite batterie supplémentaire 9 et la batterie 7,9 immédiatement inférieure. Les connexions électriques entre deux batteries adjacentes sont réalisées au niveau des bossages 24, 25 du mécanisme de verrouillage 10 qui les connecte. Des liaisons électriques à travers le mécanisme 10 réalisées par exemple à l'aide de fils et/ou des câbles électriques permettent de relier électriquement les batteries 7, 9.

Selon l'invention, la cinématique de montage d'une batterie supplémentaire 9 est comme suit.

Afin de permettre le montage d'une batterie supplémentaire 9, un deuxième mécanisme de verrouillage 10 est introduit en position déverrouillée dans la deuxième cavité 13 formée au centre de la face supérieure 14 de la batterie 7,9 déjà montée.

Une rainure 16 de la deuxième cavité 13 loge le bossage inférieur 24 dudit deuxième mécanisme de verrouillage 10 empêchant ainsi tout glissement relatif et toute rotation relative entre le bossage inférieur 24 et la batterie 7, 9 déjà montée.

On fait descendre ensuite une batterie supplémentaire 9 au-dessus de la batterie 7, 9 déjà montée, en faisant pénétrer le deuxième mécanisme de verrouillage 10 à l'intérieur de la première cavité 11 formée au centre de la face inférieure 12 de la batterie supplémentaire 9 que l'on souhaite installer.

La rainure 16 de la première cavité 11 loge le bossage supérieur 25 dudit deuxième mécanisme de verrouillage 10 empêchant ainsi tout glissement relatif et toute rotation relative entre le bossage supérieur 25 et la batterie supplémentaire 9 que l'on souhaite installer.

La mise en rotation relative de la batterie supplémentaire 9 par rapport à la batterie 7, 9 déjà montée, entraîne la rotation relative entre la partie cylindrique circulaire intérieure 21 et la partie cylindrique circulaire extérieure 20 dudit mécanisme 10. Cette mise en rotation s'effectue manuellement en faisant tourner la batterie supplémentaire 9 à la manière d'un volant.

Le mouvement de rotation entre lesdites parties cylindriques 20, 21 engendre par l'intermédiaire des biellettes 28 un mouvement de rotation des loquets 26 autour des tiges 27 verticales associées, vers l'extérieur ou vers l'intérieur du mécanisme 10 lorsque ledit mécanisme est actionné respectivement vers une position verrouillée ou vers une position déverrouillée. De préférence, le passage entre la position verrouillée et la position déverrouillée du deuxième mécanisme de verrouillage est réalisée par une rotation relative d'un angle compris entre 20° et 90°.

Pour démonter la batterie supplémentaire 9 on comprend qu'il suffit de réaliser les étapes décrites dans l'ordre inverse.

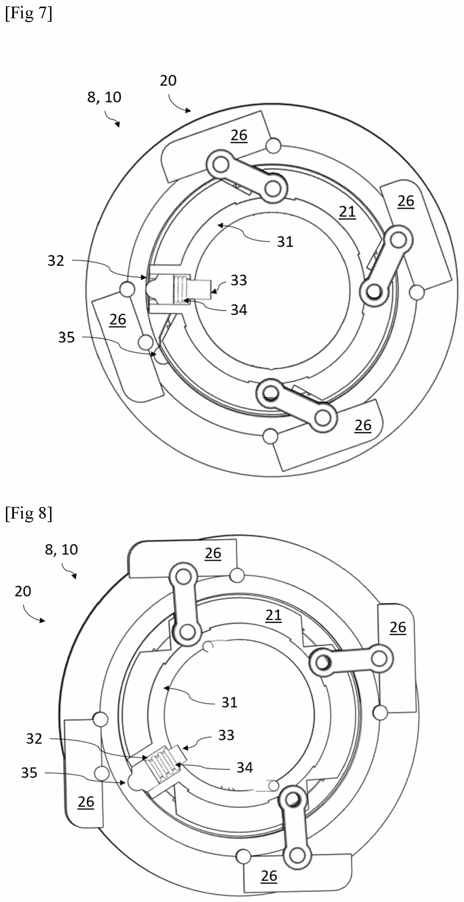

La figure 7 est une vue en coupe d'un mécanisme de verrouillage 8, 10 comprenant un collier 31 fixé sur la partie cylindrique circulaire intérieure 21 dudit mécanisme et muni d'une cavité 32 qui loge un doigt d'indexage 33 et un ressort 34 associé disposé entre le doigt 33 et le fond de la cavité 32.

Le doigt d'indexage 33 est poussé par ledit ressort 34 contre la partie cylindrique circulaire extérieure 20 dudit mécanisme de verrouillage 8, 10 et se loge dans une cavité associée 35 lorsque ledit mécanisme de verrouillage 8, 10 se trouve en position verrouillée (figure 8).

Ladite cavité 35 a une forme complémentaire audit doigt 33 et est disposée sur la partie cylindrique circulaire extérieure 20 dudit mécanisme de verrouillage 8, 10.

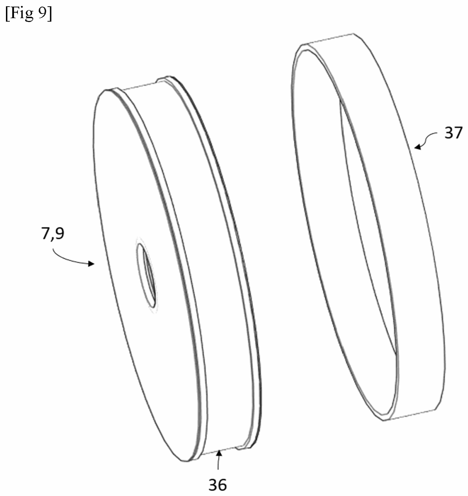

Afin d'améliorer la prise en main et de faciliter le déplacement des batteries 7, 9 en les faisant rouler, le côté latéral de chaque batterie 7, 9 est muni d'une jante 36 équipée d'un cerclage 37 en caoutchouc (figure 9).

## Revendications

1. Dispositif (2) embarqué de stockage d'énergie électrique pour véhicule automobile (1), comprenant une embase (6) reliée électriquement à une machine électrique (5) de traction du véhicule, un premier mécanisme de verrouillage (8) fixé à l'embase (6) et une première batterie (7) comprenant une première cavité (11) cylindrique formée au centre d'une face inférieure (12) de la batterie, une deuxième cavité (13) cylindrique formée au centre d'une face supérieure (14) de la batterie, ladite première batterie étant fixée de manière amovible à l'embase (6) par le premier mécanisme de verrouillage (8) destiné à être logé dans la première cavité et apte à constituer une connexion électrique entre ladite première batterie (7) et l'embase (6), ledit dispositif (2) étant **caractérisé en ce qu'**il comprend des batteries supplémentaires (9) empilées sur la première batterie (7), chaque batterie supplémentaire (9) comprenant une première cavité cylindrique formée au centre d'une face inférieure de ladite batterie supplémentaire et une deuxième cavité cylindrique formée au centre d'une face supérieure de ladite batterie supplémentaire, et étant connectée de manière amovible à la batterie immédiatement inférieure par un deuxième mécanisme de verrouillage (10) apte à constituer des connexions électriques entre ladite batterie supplémentaire et la batterie immédiatement inférieure, lesdits premier et deuxièmes mécanismes de verrouillage comprenant une position verrouillée et une position déverrouillée obtenues par une rotation relative respectivement entre la première batterie (7) et l'embase (6), et entre les batteries (7, 9).

2. Dispositif selon la revendication 1, dans lequel chaque mécanisme de verrouillage (8, 10) comprend une partie cylindrique circulaire extérieure (20), une partie cylindrique circulaire intérieure (21) et une partie intermédiaire (22) comprenant au moins un roulement (23) disposé entre lesdites parties cylindriques (20, 21) et favorisant leur rotation relative.

3. Dispositif selon la revendication 2, dans lequel chaque mécanisme de verrouillage (8, 10) comprend un bossage supérieur (25) disposé sur une face horizontale supérieure de la partie cylindrique circulaire intérieure (21) et des loquets (26) horizontaux destinés à suivre un mouvement de rotation autour d'un axe vertical vers l'extérieur ou vers l'intérieur dudit mécanisme (8, 10) lorsque ledit mécanisme (8, 10) est actionné respectivement vers une position verrouillée ou vers une position déverrouillée, le deuxième mécanisme de verrouillage (10) comprenant en outre un bossage inférieur (24) disposé sur une face horizontale inférieure de la partie cylindrique circulaire extérieure (20), lesdites cavités cylindriques (11, 13) comprenant chacune un fond (15) muni d'une rainure (16) et un alésage (17) muni d'une gorge (18), ladite rainure (16) des premières cavités (11) et ladite rainure (16) des deuxièmes cavités (13) étant destinées à loger respectivement un bossage supérieur (25) et un bossage inférieur (24) desdits mécanismes de verrouillage (8, 10), ladite gorge (18) étant destinée à recevoir au moins une partie des loquets (26) des mécanismes de verrouillage (8, 10) lorsque les mécanismes de verrouillage (8, 10) sont en position verrouillée.

4. Dispositif selon la revendication 3, dans lequel chaque loquet (26) est articulé en rotation autour d'une tige (27) correspondante verticale fixée sur la partie cylindrique circulaire extérieure (20) du mécanisme de verrouillage (8, 10) comprenant ledit loquet.

5. Dispositif selon la revendication 4, dans lequel le mouvement de rotation des loquets (26) est réalisé par l'intermédiaire de biellettes (28) associées aux loquets, à raison d'une biellette par loquet, chaque biellette (28) ayant une première extrémité articulée au loquet correspondant et une deuxième extrémité articulée à la partie cylindrique circulaire intérieure (21) du mécanisme de verrouillage (8, 10) comprenant ledit loquet.

6. Dispositif selon l'une quelconque des revendications 2 à 5, dans lequel la partie cylindrique circulaire intérieure (21) dudit mécanisme de verrouillage (8, 10) comprend un doigt d'indexage (33) et un ressort associé (34), ledit doigt d'indexage (33) étant poussé par ledit ressort (34) contre la partie cylindrique circulaire extérieure dudit mécanisme de verrouillage (8, 10) et se logeant dans une cavité associée (35) lorsque ledit mécanisme de verrouillage (8, 10) se trouve en position verrouillée, ladite cavité associée (35) ayant une forme complémentaire audit doigt (33) et étant disposée sur la partie cylindrique circulaire extérieure (20) dudit mécanisme de verrouillage (8, 10).

7. Dispositif selon l'une quelconque des revendications précédentes, dans lequel le passage entre la position verrouillée et la position déverrouillée des mécanismes de verrouillage est réalisée par une rotation d'un angle compris entre 20° et 90°.

8. Dispositif selon l'une quelconque des revendications précédentes, dans lequel les batteries (7, 9) ont une forme de cylindre circulaire droit.

9. Dispositif selon la revendication 8, dans lequel le côté latéral des batteries (7, 9) est muni d'une jante (36) équipée d'un cerclage (37) en caoutchouc.

10. Véhicule automobile équipé d'au moins une machine électrique de traction et d'un dispositif embarqué de stockage d'énergie électrique selon l'une quelconque des revendications précédentes.

## Patentansprüche

1. Eingebaute Vorrichtung (2) zum Speichern von elektrischer Energie für ein Kraftfahrzeug (1), umfassend einen Sockel (6), der elektrisch mit einer elektrischen Antriebsmaschine (5) des Fahrzeugs verbunden ist, einen ersten Verriegelungsmechanismus (8), der an dem Sockel (6) befestigt ist, und eine erste Batterie (7), die einen ersten zylindrischen Hohlraum (11), der in der Mitte einer Unterseite (12) der Batterie gebildet ist, einen zweiten zylindrischen Hohlraum (13), der in der Mitte einer Oberseite (14) der Batterie gebildet ist, umfasst, wobei die erste Batterie lösbar an dem Sockel (6) durch den ersten Verriegelungsmechanismus (8) befestigt ist, der dazu bestimmt ist, in dem ersten Hohlraum aufgenommen zu werden, und in der Lage ist, eine elektrische Verbindung zwischen der ersten Batterie (7) und dem Sockel (6) herzustellen, wobei die Vorrichtung (2) **dadurch gekennzeichnet ist, dass** sie zusätzliche Batterien (9) umfasst, die auf der ersten Batterie (7) gestapelt sind, wobei jede zusätzliche Batterie (9) einen ersten zylindrischen Hohlraum, der in der Mitte einer Unterseite der zusätzlichen Batterie gebildet ist, und einen zweiten zylindrischen Hohlraum, der in der Mitte einer Oberseite der zusätzlichen Batterie ausgebildet ist, umfasst und lösbar mit der unmittelbar darunter liegenden Batterie durch einen zweiten Verriegelungsmechanismus (10) verbunden ist, der in der Lage ist, elektrische Verbindungen zwischen der zusätzlichen Batterie und der unmittelbar darunter liegenden Batterie herzustellen, wobei der erste und der zweite Verriegelungsmechanismus eine verriegelte Position und eine entriegelte Position umfassen, die durch eine jeweilige relative Drehung zwischen der ersten Batterie (7) und dem Sockel (6) und zwischen den Batterien (7, 9) erhalten werden.

2. Vorrichtung nach Anspruch 1, wobei jeder Verriegelungsmechanismus (8, 10) einen äußeren kreiszylindrischen Abschnitt (20), einen inneren kreiszylindrischen Abschnitt (21) umfasst und einen Zwischenabschnitt (22), der mindestens ein Lager (23) umfasst, das zwischen den zylindrischen Abschnitten (20, 21) angeordnet ist und deren relative Drehung begünstigt.

3. Vorrichtung nach Anspruch 2, wobei jeder Verriegelungsmechanismus (8, 10) einen oberen Vorsprung (25) umfasst, der auf einer horizontalen Oberseite des inneren kreiszylindrischen Abschnitts (21) angeordnet ist, und horizontale Klinken (26), die dazu bestimmt sind, einer Drehbewegung um eine vertikale Achse nach außerhalb oder nach innerhalb des Mechanismus (8, 10) zu folgen, wenn der Mechanismus (8, 10) jeweils zu einer verriegelten Position hin oder zu einer entriegelten Position hin betätigt wird, wobei der zweite Verriegelungsmechanismus (10) ferner einen unteren Vorsprung (24) umfasst, der auf einer horizontalen Unterseite des äußeren kreiszylindrischen Abschnitts (20) angeordnet ist, wobei jeder der zylindrischen Hohlräume (11, 13) einen Boden (15) umfasst, der mit einer Rille (16) versehen ist, und eine Bohrung (17), die mit einer Nut (18) versehen ist, wobei die Rille (16) der ersten Hohlräume (11) und die Rille (16) der zweiten Hohlräume (13) dazu bestimmt sind, einen oberen Vorsprung (25) beziehungsweise einen unteren Vorsprung (24) der Verriegelungsmechanismen aufzunehmen (8, 10), wobei die Nut (18) dazu bestimmt ist, zumindest einen Teil der Klinken (26) der Verriegelungsmechanismen (8, 10) aufzunehmen, wenn die Verriegelungsmechanismen (8, 10) in der verriegelten Position sind.

4. Vorrichtung nach Anspruch 3, wobei jede Klinke (26) um eine entsprechende vertikale Stange (27) drehbar angelenkt ist, die an dem äußeren kreiszylindrischen Abschnitt (20) des die Klinke umfassenden Verriegelungsmechanismus (8, 10) befestigt ist.

5. Vorrichtung nach Anspruch 4, wobei die Drehbewegung der Klinken (26) über den Klinken zugeordnete Lenker (28), mit einem Lenker je Klinke, ausgeführt wird, wobei jeder Lenker (28) ein erstes Ende hat, das an der entsprechenden Klinke angelenkt ist, und ein zweites Ende, das an dem inneren kreiszylindrischen Abschnitt (21) des die Klinke umfassenden Verriegelungsmechanismus (8, 10) angelenkt ist.

6. Vorrichtung nach einem der Ansprüche 2 bis 5, wobei der innere kreiszylindrische Abschnitt (21) des Verriegelungsmechanismus (8, 10) einen Indexierfinger (33) und eine zugeordnete Feder (34) umfasst, wobei der Indexfinger (33) durch die Feder (34) gegen den äußeren kreiszylindrischen Abschnitt des Verriegelungsmechanismus (8, 10) gedrückt wird und in einem zugeordneten Hohlraum (35) aufgenommen wird, wenn sich der Verriegelungsmechanismus (8, 10) in der verriegelten Position befindet, wobei der zugeordnete Hohlraum (35) eine zu dem Finger (33) komplementäre Form hat und an dem äußeren kreiszylindrischen Abschnitt (20) des Verriegelungsmechanismus (8, 10) angeordnet ist.

7. Vorrichtung nach einem der vorhergehenden Ansprüche, wobei der Übergang zwischen der verriegelten Position und der entriegelten Position der Verriegelungsmechanismen durch eine Drehung um einen Winkel zwischen 20° und 90° ausgeführt wird.

8. Vorrichtung nach einem der vorhergehenden Ansprüche, wobei die Batterien (7, 9) die Form eines geraden Kreiszylinders haben.

9. Vorrichtung nach Anspruch 8, wobei die Seitenfläche der Batterien (7, 9) mit einer Felge (36) versehen ist, die mit einer Umreifung (37) aus Kautschuk ausgestattet ist.

10. Kraftfahrzeug, das mit mindestens einer elektrischen Antriebsmaschine und einer eingebauten Vorrichtung zum Speichern von elektrischer Energie nach einem der vorhergehenden Ansprüche ausgestattet ist.

## Claims

1. On-board electrical energy storage device (2) for a motor vehicle (1), comprising a baseplate (6) electrically connected to an electric traction machine (5) of the vehicle, a first locking mechanism (8) fastened to the baseplate (6) and a first battery (7) comprising a first cylindrical cavity (11) formed in the centre of a lower face (12) of the battery, and a second cylindrical cavity (13) formed in the centre of an upper face (14) of the battery, said first battery being removably attached to the baseplate (6) by the first locking mechanism (8) intended to be housed in the first cavity and able to form an electrical connection between said first battery (7) and the baseplate (6), said device (2) being **characterized in that** it comprises additional batteries (9) stacked on the first battery (7), each additional battery (9) comprising a first cylindrical cavity formed in the centre of a lower face of said additional battery and a second cylindrical cavity formed in the centre of an upper face of said additional battery, and being removably connected to the battery immediately below by a second locking mechanism (10) capable of forming electrical connections between said additional battery and the battery immediately below, said first and second locking mechanisms comprising a locked position and an unlocked position that are obtained by relative rotation between the first battery (7) and the baseplate (6), respectively, and between the batteries (7, 9).

2. Device according to Claim 1, wherein each locking mechanism (8, 10) comprises an outer circular cylindrical portion (20), an inner circular cylindrical portion (21) and an intermediate portion (22) comprising at least one bearing (23) arranged between said cylindrical portions (20, 21) to facilitate the relative rotation thereof.

3. Device according to Claim 2, wherein each locking mechanism (8, 10) comprises an upper boss (25) arranged on an upper horizontal face of the inner circular cylindrical portion (21) and horizontal latches (26) intended to rotate about a vertical axis toward the outside or toward the inside of said mechanism (8, 10) when said mechanism (8, 10) is switched to a locked position or to an unlocked position, respectively, the second locking mechanism (10) further comprising a lower boss (24) arranged on a lower horizontal face of the outer circular cylindrical portion (20), said cylindrical cavities (11, 13) each comprising a bottom (15) provided with a slot (16) and a bore (17) provided with a groove (18), said slot (16) in the first cavities (11) and said slot (16) in the second cavities (13) being intended to house an upper boss (25) and a lower boss (24) of said locking mechanisms (8, 10), respectively, said groove (18) being intended to receive at least some of the latches (26) of the locking mechanisms (8, 10) when the locking mechanisms (8, 10) are in the locked position.

4. Device according to Claim 3, wherein each latch (26) is articulated in rotation about a corresponding vertical rod (27) fastened to the outer circular cylindrical portion (20) of the locking mechanism (8, 10) comprising said latch.

5. Device according to Claim 4, wherein the rotational movement of the latches (26) is effected by means of connecting rods (28) associated with the latches, with one connecting rod per latch, each connecting rod (28) having a first end articulated with the corresponding latch and a second end articulated with the inner circular cylindrical portion (21) of the locking mechanism (8, 10) comprising said latch.

6. Device according to any one of Claims 2 to 5, wherein the inner circular cylindrical portion (21) of said locking mechanism (8, 10) comprises an indexing pin (33) and an associated spring (34), said indexing pin (33) being biased by said spring (34) against the outer circular cylindrical portion of said locking mechanism (8, 10) and being housed in an associated cavity (35) when said locking mechanism (8, 10) is in the locked position, said associated cavity (35) being shaped to fit said pin (33) and being arranged on the outer circular cylindrical portion (20) of said locking mechanism (8, 10).

7. Device according to any one of the preceding claims, wherein the locking mechanisms are switched between the locked position and the unlocked position by a rotation through an angle of between 20° and 90°.

8. Device according to any one of the preceding claims, wherein the batteries (7, 9) are in the form of straight circular cylinders.

9. Device according to Claim 8, wherein the lateral side of the batteries (7, 9) is provided with a rim (36) equipped with a rubber hoop (37).

10. Motor vehicle equipped with at least one electric traction machine and an on-board electrical energy storage device according to any one of the preceding claims.
